# EUROPEAN PATENT APPLICATION

(11) **EP 1 894 542 A1**
(43) Date of publication of application: **05.03.2008**
(21) Application number: 06425614.2
(22) Date of filing: 04.09.2006
(51) Int. Cl.: A61C 8/00

(54) **Implant for dental prosthesis**

(71) Applicant: Bio-Micron S.A.S. di Campetti Emilio, 20051 Limbiate (IT)
(72) Inventor: Cremona, Emilio, 21040 Venegono Inferiore (IT); Forchino, Fabrizio Carlo, 21016 Luino (IT)
(74) Representative: Pellegri, Alberto

(57) **Abstract**

The head of an implanted metal insert is not cylindrical but has a truncated cone shape with a conicity that may be generally comprised between 1 and 3 degrees. Conformally, a replaceable metal mesostructure or stump that is mounted on the head of the implanted body by fastening it with the axial primary fixing screw has, at its base, a truncated cone cavity that fits onto the conical head such that upon tighhtening the fixing screw there is not any gap that may be infiltrated by organic liquids. The circular hem of the truncated cone cavity that fits over the truncated cone head of the implanted metal body is tailored in conformity with the current gum profile of the patient such that, upon installation on the head of the implanted insert, it juxtaposes to the rim of the gum of the patient.

A so re-modeled mesostructure provides the proper base onto which meet a similarly re-tailored hem of the metal crown-capsule will the eventually cemented over it, for a perfectly aesthetic appearance of a re-made prosthetic tooth.

## Description

The practice of osteointegrated implants for dental prosthesis has become common.

According to a consolidated protocol, a metal insert, commonly of titanium, optionally provided with a bio-compatible coating, is implanted in the mandibular or maxillary bone of the patient. Commonly, the metal insert includes a stem portion having a helicoidal thread and a cylindrical head having on its end surface either a protrusion or a recess of polygonal cross section and an axial threaded blind hole.

On the implanted metal body is then mounted a mesostructure or stump, commonly of titanium or of a gold alloy, having a truncated cone outer of surface, by tightening a primary fixing screw passing through an axial hole of the mesostructure into the threaded axial blind hole of the implanted metal body. The polygonal cross section protrusion or recess present on the end surface of the cylindrical head of the implanted body fits into or accommodates a geometrically coordinated polygonal cross section recess or protrusion present at the base of the truncated cone stump (mesostructure) for impeding any relative rotation of the joined parts.

On the truncated cone mesostructure is eventually installed a metallic capsule or overstructure onto which the resin or ceramic crown of the prosthesic tooth is formed.

Also the coupling surfaces of the mesostructure or stump and of the metal capsule may include portions having polygonal cross section or similarly locking features for impeding any relative rotation between the two joined parts. The metal capsule may be cemented onto the metal stump or blocked by a set screw.

A recurrent problem of dental prosthesis with osteointegrated implant is a progressive retraction of the gum, particularly frequent in elder patients.

The progressive retraction of the gums exposes more and more the head of the metal implant on which the metal stump is mounted which is in turn covered by the crown-capsule, with unaesthetic consequences, the correction of which may be relatively laborious, difficult and even traumatic.

An objective of the applicant was to find a remedy to these difficulties, making the correction of inaesthetisms caused by retraction of gums, less traumatic and far simpler to be done leaving implanted metal in place of the insert that in time has generally reached a remarkable integration in the host bone.

The applicant has found a way of permitting a relatively simple and effective substitution of the crown-capsule and of the mesostructure or stump with a new stump designed with a re-modeled hem to be installed onto the head of the existing implanted body and with a new crown-capsule having a hem portion conformally designed to as the hem portion of the new stump piece thus reestablishing an aesthetical appearance of the prosthesis.

Accordingly, the cemented assembly of the crown-capsule and of the mesostructure or stump may untraumatically be removed by sawing open the top portion of the crown-capsule to permit access to the primary fixing screw that may therefore be loosened and removed for completing lifting off the assembly from the head of the implanted metal insert.

Differently for the common practice, the head of the implanted metal insert is not cylindrical but has a truncated cone shape with a conicity that may be generally comprised between 1 and 3 degrees.

Conformally, the metal mesostructure or stump that is mounted on the head of the implanted body by fastening it with the axial primary fixing screw has, at its base, a truncated cone cavity that fits onto the conical head such that upon tighhtening the fixing screw there is not any gap that may be infiltrated by organic liquids.

The circular hem of the truncated cone cavity that fits over the truncated cone head of the implanted metal body is tailored in conformity with the new gum profile such that, upon installation on the head of the implanted insert, it juxtaposes to the rim of the gum of the patient.

The so re-modeled mesostructure provides the proper base onto which meet a similarly re-tailored hem of the metal crown-capsule will the eventually cemented over it, for a perfectly aesthetic appearance of the re-made prosthetic tooth.

According to the prosthesis architecture of the applicant, the mesostructure and the superstructure (i.e. threaded stump and the crown-capsule assembly) may be substituted in time with a remodeled stump and crown-capsule such that their hem be re-tailored to conform to the new profile assumed by the gum of the patient, in practice incrementally covering more of the truncated cone outer surface of the head of the original implanted metal body, that is covering areas that in time had become exposed because of the retraction of the gums.

**Figure 1** is a partially exploded view of the implant dental prosthesis of the present invention.

**Figure 2** is another view showing the screw fastening of the stump over the truncated cone shaped head of the metal implant.

**Figure 3** schematically shows the way in which the unaesthetism caused by the retraction of the gum may be corrected by substituting the stump and crown-capsule assembly over the metal implant.

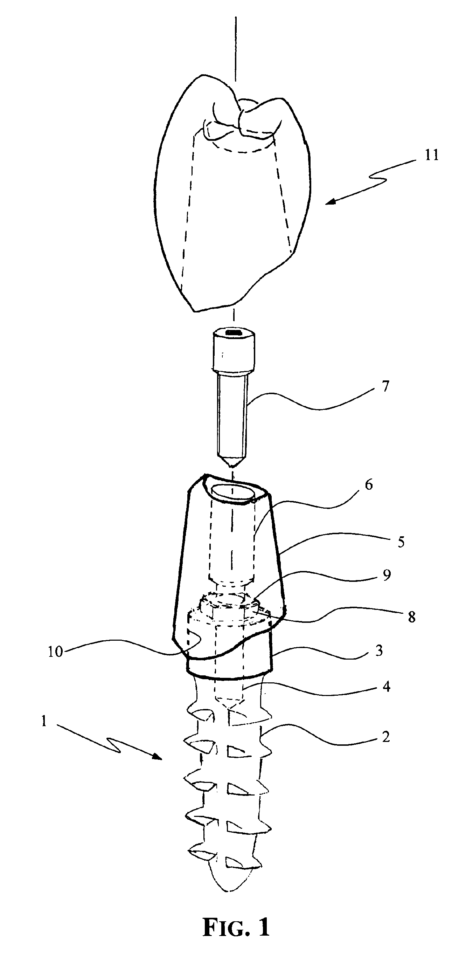

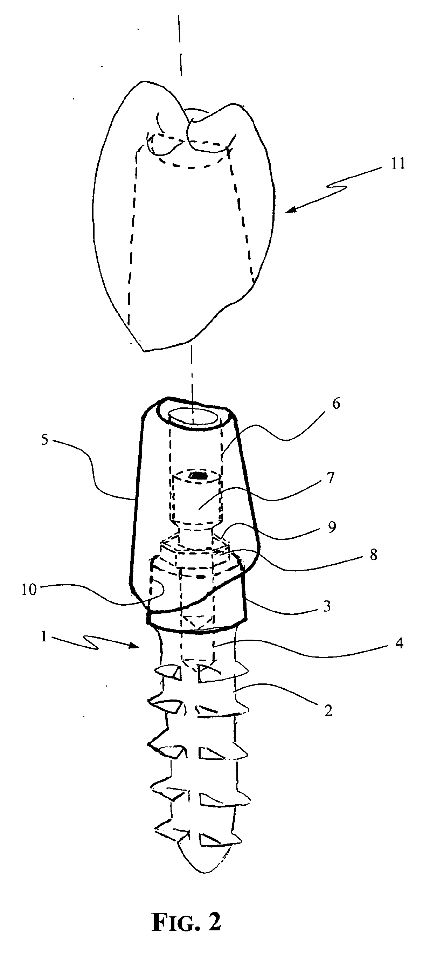

Figures 1 and 2 are partially exploded views of an implant dental prosthesis of the present invention.

The prosthesis includes a metal body 1, commonly of titanium to be implanted in the mandibular or maxillary bone of a patient, having a threaded stem portion 2 and a truncated cone shaped head 3, the conicity of which may generally be comprised between 1 and 3 degrees.

In the illustrated example, from the end surface of the truncated cone head 3, protrudes a relief of hexagonal cross section, but it may have any other polygonal or even complex cross section, apt to match with a cooperating conformal feature at the bottom of the conical cavity of the mesostructure, to prevent relative rotation.

The metal body 1 has an axial threaded blind hole 4.

A stump 5 also of titanium or of a gold alloy, commonly having an outer truncated cone surface, has an axial through hole 6 for the passage of a primary fastening screw 7 of the stump onto the implanted metal body 1.

According to an essential feature of the present invention, the lower portion of the stump 5 has a cavity 10 that is geometrically conformed to accommodate a certain portion of the truncated cone head portion 3 of the implanted metal body 1.

The hexagonal relief 8 on the end surface of the truncated cone head of the implanted body 1 is fits into a conformal hexagonal cross section cavity 9 present at the bottom of the truncated cone cavity 10 of the base of the stump 5.

Therefore, while the polygonal coupling (8-9) impedes any relative rotation of the two couple parts, the conical coupling of the truncated cone cavity 10 present at the base of the stump 5 with the truncated cone head 3 of the implanted body 1, insures that, upon fastening the two matching parts together by tightening the primary fixing screw 7 into the axial threaded blind hole 4 of the implanted body 1, an outstandingly stable mechanical connection between the two pieces is established without leaving any gaps that may be infiltrated by organic liquid between the two joined parts (the implant 1 and the stump 5).

Of course, above the truncated cone stump 5 will be commonly applied a metal capsule on which the resin or ceramic crown of the prosthetic tooth is formed either in.

The fastening of the crown-capsule 11 onto the stump 5 may be done by cementing the two parts together or alternatively, a blocking set screw may be utized, according to normal odontoiatric practices.

Should in time occur a major retraction of the gums of the patient, as far as causing a unaesthetic exposure of the head of the metal implant, it is possible by opening the top of the crown-capsule structure 11 to unscrew the primary fixing screw 7 and lift off the assembly composed of the mesostructure or stump 5 and of the crown-capsule 11 from the head of the implant 1 for installing thereon a substitute stump 5 with a lower hem profile redesigned to conform to the new profile of the retracted gum of the patient, such to cover also the portion of the head 3 of the metal implant 1 that had become exposed.

Over the new stump 5 will thereafter be applied and eventually cemented a similarly redesigned crown-capsule piece 11 of the prosthesis tooth.

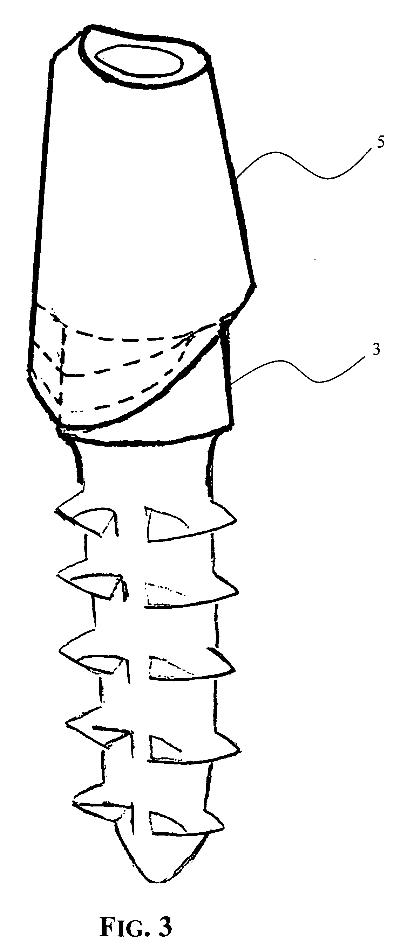

Figure 3 schematically shows profile of the lower hem of the truncated cone cavity of the stump 5 may be redefined, tailoring it to overlay portions of the truncated cone outer surface of the head 3 of the metal implant 1 that had become exposed because of the retraction of the gums and which will thus be covered by the new substitute crown-capsule installed on the new substitute stump 5.

## Claims

1. Implant for dental prosthesis comprising a metal body adapted to be implanted in the mandibular or maxillary bone, having a threaded stem portion and a head with a polygonal cross section protrusion or recess in the end surface of the head and an axial threaded blind hole, a metallic mesostructure having a truncated cone shape and a polygonal cross section recess or protrusion at the base for coupling with said polygonal cross section protrusion or recess in the end surface of the head of the implanted metallic body for preventing a relative rotation of the two joined parts, an axial through hole for the passage of a fixing screw to be tightened in said threaded blind hole of the implanted metal body, and an overstructure composed by a metal capsule onto which is formed a resin or ceramic crown of the prosthetic tooth to be fixed onto the truncated cone outer surface of said mesostructure, **characterized in that**
said head of the implanted metallic body has an outer truncated cone surface of conicity comprised between 1 and 3 degrees;
said mesostructure has at its base a truncated cone cavity for coupling onto said conical surface of the head of the implanted metal body, the hem of which, at least for part of the circumference, extends over covering the conical surface of the head of the implanted body.

2. The implant for dental prosthesis of claim 1, **characterized in that** the polygonal cross sectional portion defined on the end surface of the truncated cone head of the implanted metal body is in relief and said polygonal cross section part of said mesostructure is a recess defined at the bottom of said truncated cone cavity at the base of the mesostructure
